# EUROPÄISCHE PATENTSCHRIFT

(11) **EP 1 669 179 B1**
(45) Veröffentlichungstag und Bekanntmachung des Hinweises auf die Patenterteilung: **14.05.2014**
(21) Anmeldenummer: 05026531.3
(22) Anmeldetag: 05.12.2005
(51) Int. Cl.: B28B 13/02, G01F 11/46

(54) **Dosiervorrichtung**
Dosing apparatus
Appareil de dosage

(30) Priorität: 13.12.2004 DE 102004059954
(43) Veröffentlichungstag der Anmeldung: 14.06.2006
(73) Patentinhaber: TopWerk GmbH, 93057 Regensburg (DE)
(72) Erfinder: Scheuerlein, Richard, 93105 Tegernheim (DE)
(74) Vertreter: Kotitschke & Heurung Partnerschaft mbB

(56) Entgegenhaltungen:
- DE-A1- 19 525 817
- DE-U- 7 308 509
- DE-U1- 29 700 303
- FR-A1- 2 179 750
- US-A1- 3 217 069

## Beschreibung

Die Erfindung betrifft eine Vorrichtung zum Dosieren der Füllmenge zum Einfüllen in Formen zur Herstellung von Bausteinen insbesondere Betonbausteinen, die zwischen einem Vorratsbehälter und den zu befüllenden Formen anzuordnen ist.

Betonbausteine, beispielsweise Betonplatten, Betonsteine und ähnliche Bausteine werden mit Hilfe von Formen aus verflüssigtem Beton durch Pressen oder Vibration hergestellt. Um die Formen quantitativ zu befüllen, sind Dosiervorrichtungen bekannt, die mit Hilfe von Dosiertöpfen eine volumetrische Dosierung der Füllmenge der Formen ermöglichen. Es ist auch bekannt, eine gewichtsmäßige Dosierung mit Hilfe von Behälterwaagen zu erzielen.

Beide bekannten Möglichkeiten der Dosierung haben gravierende Mängel hinsichtlich der Füllmengengenauigkeit, die sich insbesondere bei kurzen Taktzeiten zwischen den einzelnen Füllungen bemerkbar machen.

Ein weiterer wesentlicher Nachteil der herkömmlichen volumetrischen Dosierung besteht in dem zeitaufwändigen Wechsel der Dosiertöpfe bei unterschiedlichen Füllmengen.

Des Weiteren sind in FR-A-2179750 und DE-U-9700303 Dosiervorrichtungen beschrieben, die Dosierbuchsen umfassen, deren Innenvolumen variabel eingestellt werden kann.

Die der Erfindung zugrunde liegende Aufgabe besteht daher darin, eine Vorrichtung der eingangs genannten Art zu schaffen, die sich durch eine hohe Dosiergenauigkeit und eine hohe Vielseitigkeit hinsichtlich unterschiedlicher Füllmengen auszeichnet, die je nach Produktgröße zum Beispiel bei der Herstellung von Betonplatten jeweils notwendig sind.

Diese Aufgabe wird gemäß der Erfindung durch die im Anspruch 1 angegebene Vorrichtung gelöst.

Besonders bevorzugte Ausgestaltungen und Weiterbildungen der erfindungsgemäßen Vorrichtung sind Gegenstand der Patentansprüche 2 bis 8.

Im Folgenden werden anhand der zugehörigen Zeichnung besonders bevorzugte Ausführungsbeispiele der Erfindung näher beschrieben. Es zeigen
Fig. 1 eine teilweise geschnittene Seitenansicht einer Vorrichtung zum Herstellen von Betonbausteinen mit einem Ausführungsbeispiel der erfindungsgemäßen Dosiervorrichtung,
Fig. 2 eine Draufsicht auf die in Fig. 1 dargestellte Dosiervorrichtung,
Fig. 3 eine schematische Ansicht der Drehpositionen der in Fig. 2 dargestellten Dosiervorrichtung,
Fig. 4 schematisch eine Anordnung zur Veränderung der Dosiermenge,
Fig. 5 eine Schnittansicht eines Ausführungsbeispiels einer Dosierbuchse und
Fig. 6 eine Schnittansicht eines weiteren Ausführungsbeispiels einer Dosierbuchse.

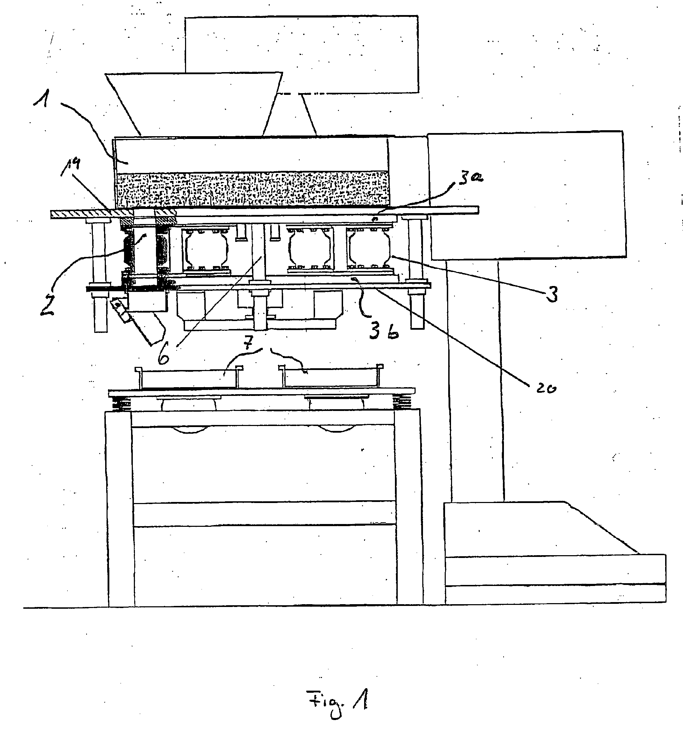

Die in Fig. 1 dargestellte Vorrichtung zum Herstellen von Betonbausteinen umfasst einen Vorratsbehälter für verflüssigten Beton, ein Ausführungsbeispiel der erfindungsgemäßen Dosiervorrichtung in Form eines Dosiertellers 3 und eine Anordnung von Formen 7, die über den Dosierteller 3 dosiert mit bestimmten Füllmengen befüllt werden.

Das im Vorratsbehälter 1 aufgenommene zu dosierende Füllmaterial ist ein flüssiges, körniges, abrasives oder pastöses Material, insbesondere verflüssigter Beton in Gießbetonkonsistenz, das aus dem Vorratsbehälter 1 durch den Dosierteller 3 dosiert entnommen wird.

Zu diesem Zweck besteht der in Fig. 1 dargestellte Dosierteller 3 aus einer oberen, d.h. vorratsbehälterseitigen Platte 3a und einer unteren, d.h. formenseitigen Platte 3b. Zwischen den Platten 3a und 3b sind Dosierbuchsen 2 so angeordnet, dass sie mit ihren Einlass- und Auslassöffnungen in den Platten 3a und 3b jeweils münden. Obwohl in der Zeichnung vier Dosierbuchsen 2 dargestellt sind, kann auch eine andere Anzahl von z.B. acht Dosierbuchsen vorgesehen sein.

Der Dosierteller 3 ist um eine mittlere Achse 6 zwischen einer Position, in der die Dosierbuchsen 2 vom Vorratsbehälter 1 befüllt werden können, und einer Position drehbar, in der die Dosierbuchsen 2 ihren Inhalt in die Formen 7 abgeben können.

Der Dosierteller 3 ist in einem Halterahmen aus einer vorratsbehälterseitigen Platte 19 und einer formenseitigen Platte 20 angeordnet, die mit Öffnungen jeweils versehen sind, die mit den Einlass- und Auslassöffnungen in den Platten 3a und 3b des Dosiertellers 3 in den jeweiligen Drehpositionen des Dosiertellers 3 zur Deckung kommen können. Über die Öffnungen in der Platte 19 können somit die Dosierbuchsen 2 vom Vorratsbehälter 1 befüllt werden, während in der anderen Drehposition die Dosierbuchsen 2 über die Öffnungen in der Platte 20 ihren Inhalt an die Formen 6 abgeben können.

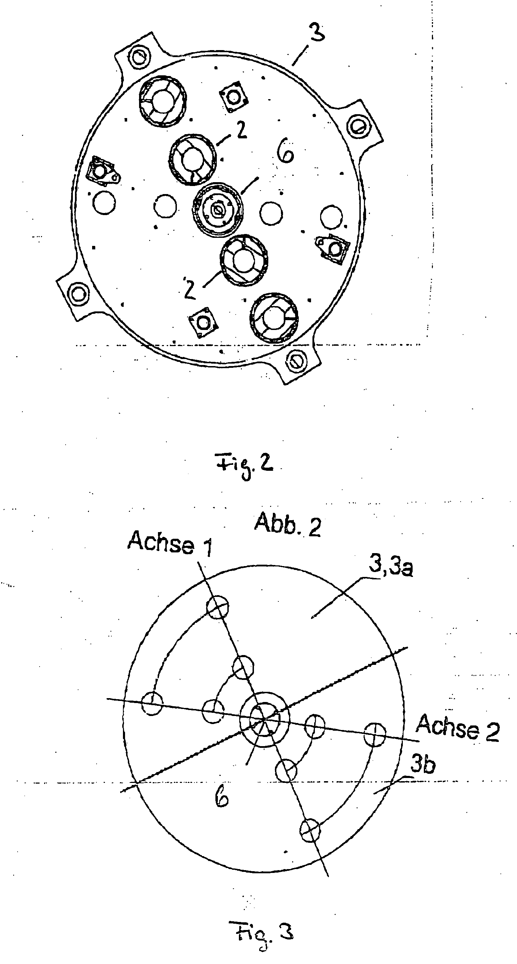

Wie es im Einzelnen in den Fig. 2 und 3 dargestellt ist, sind die Dosierbuchsen 2 in einer Ebene angeordnet, in der die Drehachse 6 des Dosiertellers 3 liegt. D.h. in Fig. 2, dass die Dosierbuchsen 2 im Querschnitt in einer Linie zueinander angeordnet sind, die durch den Drehpunkt des Dosiertellers 3 geht.

Der Dosierteller 3 aus einer oberen und einer unteren Platte 3a und 3b bildet eine feste Baueinheit, wobei die Platten 3a und 3b durch die Dosierbuchsen 2 miteinander verbunden sind.

In Fig. 3 sind zwei Drehpositionen des Dosiertellers 3 durch zwei Achsen 1 und 2 jeweils wiedergegeben. In der einen Position sind die Dosierbuchsen 2 zum Vorratsbehälter 1 so ausgerichtet, dass sie über diesen befüllt werden können, während in der anderen Drehposition die Dosierbuchsen 2 vom Vorratsbehälter 1 getrennt und so angeordnet sind, dass sie ihren Inhalt in die Formen 7 entleeren können.

Bei dem in der Zeichnung dargestellten Ausführungsbeispiel ist der Dosierteller 3 drehbar ausgebildet, es ist aber auch gleichfalls möglich, den Drehteller in anderer Weise relativ zum Vorratsbehälter und relativ zu den zu befüllenden Formen zu bewegen, beispielsweise zu verschieben, derart, dass in einer Position die Dosierbuchsen vom Vorratsbehälter aus befüllt werden können, während in einer anderen Position die Dosierbuchsen 2 ihren Inhalt an die Formen abgeben können.

Die Bewegung des Dosiertellers 3 von der Materialaufnahme bis zur Materialabgabe kann hydraulisch oder mechanisch erfolgen.

Die Dosierbuchsen 2 bestehen aus einem Metall- oder Kunststoffgehäuse mit einer elastischen Innenbuchse, z.B. aus einem gummiartigen Material, die je nach der gewünschten Dosiermenge durch Komprimieren im Querschnitt variabel ist, d.h. deren Innenvolumen verändert werden kann. Diese Querschnittsänderung und damit die Volumenänderung wird entweder pneumatisch, hydraulisch oder auf mechanischem Weg erzielt.

Die Dosierbuchsen können auch als starre Bauteile ausgebildet sein, in die seitlich ein Kolben eingefahren werden kann, der die Änderung des Querschnitts und damit des Innenvolumens bewirkt. Auch bei diesem Ausführungsbeispiel kann der Kolben pneumatisch, hydraulisch oder mechanisch betätigt werden.

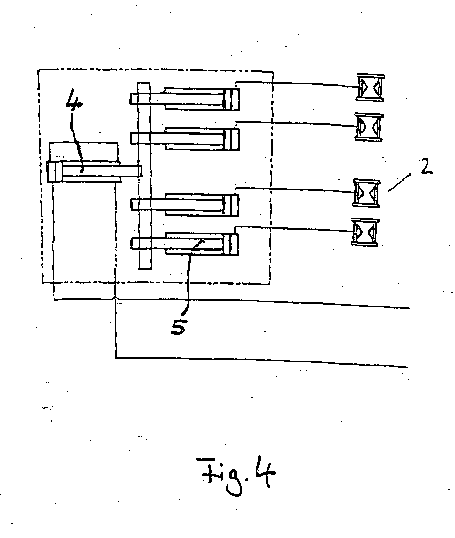

Bei einer pneumatischen oder hydraulischen Veränderung des Innenvolumens der Dosierbuchsen 2 kann beispielsweise in der in Fig. 4 dargestellten Weise ein Mengenzumesssystem verwendet werden, bei dem ein Druckmedium, beispielsweise ein gasförmiges oder flüssiges Medium durch Kolben 5 in wählbarer Menge den Dosierbuchsen 2 zugeführt wird. In dieser Weise wird für eine gleichmäßige Mengen- und Druckverteilung zur Kompression der Dosierbuchsen 2 gesorgt. Wie es in Fig. 4 dargestellt ist, kann die Dosiermenge, d.h. das Innenvolumen der Dosierbuchsen 2 über eine elektrische Wegmessung der hydraulischen oder mechanischen Schubeinheit gewählt werden.

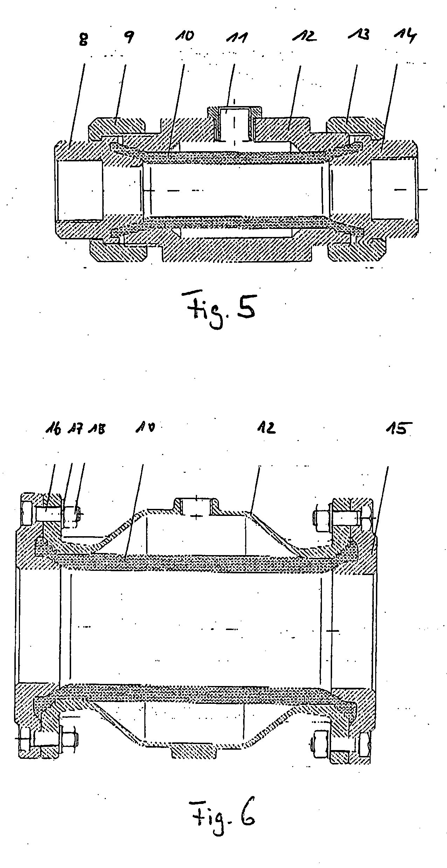

In den Fig. 5 und 6 sind zwei Ausführungsbeispiele von Dosierbuchsen 2 im Einzelnen dargestellt.

Das in Fig. 5 dargestellte Ausführungsbeispiel weist ein Gehäuse 12 auf, das an seinen Enden mit Anschlussmuffen 8, 14 versehen ist, die über Überwurfmuttern 9, 13 am Gehäuse 12 befestigt sind. Eine Manschette 10 dient als elastische Innenbuchse der Dosierbuchse 2.

Eine Reduzierung 11 ist dazu vorgesehen, hydraulisch oder pneumatisch auf die Manschette 10 so einzuwirken, dass diese das gewünschte Innenvolumen hat, das der dosierten Füllmenge entspricht, mit der die Formen 7 zu befüllen sind.

Bei dem in Fig. 6 dargestellten Ausführungsbeispiel ist gleichfalls ein Gehäuse 12 vorgesehen, in dem eine Manschette 10 angeordnet ist, die die gleiche Funktion wie beim Ausführungsbeispiel von Fig. 5 hat.

An beiden Enden des Gehäuses 12 ist jeweils ein Flansch 15 vorgesehen, der über eine Schraube 16, eine Scheibe 17 und eine Sechskantmutter 18 am Gehäuse 12 befestigt ist. Zwischen dem Flansch 15 und dem Gehäuse 12 sitzt die in ihrem Innenvolumen variable Manschette 10.

Die oben beschriebene Vorrichtung arbeitet wie folgt:
Über die Einrichtung zum Einstellen des Innenvolumens der Dosierbuchsen 2, die beispielsweise in Fig. 4 dargestellt ist, wird die elastische Innenbuchse der Dosierbuchsen 2 so beaufschlagt, dass das gewünschte Innenvolumen erreicht ist, das der Füllmenge entspricht, mit der die Formen 7 zu befüllen sind.

Es ist aber auch möglich, die Dosierbuchsen zunächst mit einem gegebenen unveränderten Innenvolumen aufzufüllen und erst dann von außen so zu beaufschlagen, dass das gewünschte Innenvolumen erreicht wird. In diesem Fall wird eine überschüssige Füllmenge in den Vorratsbehälter zurückgedrängt.

Die für eine Form 7 benötigte Füllmenge kann von einer oder mehreren Dosierbuchsen 2 kommen.

Der Dosierteller 3 wird anschließend so angeordnet, dass die Dosierbuchsen 2 mit der im Vorratsbehälter 1 enthaltenen gießfähigen Masse, beispielsweise flüssigem Beton befüllt werden. In dieser Position sind die vorratsbehälterseitigen Öffnungen der Dosierbuchsen 2 und die entsprechenden Öffnungen in der Platte 19 des Halterahmens deckungsgleich angeordnet. Durch eine Drehung um die Achse 6 wird der Dosierteller 3 anschließend in seine Position zum Befüllen der Formen 7 gebracht. In dieser Position sind die formenseitigen Öffnungen der Dosierbuchsen 2 und die entsprechenden Öffnungen in der Platte 20 des Halterahmens deckungsgleich. Die Formen 7 werden dann gleichzeitig dosiert mit der Füllmenge befüllt, die sich in den Dosierbuchsen 2 befindet.

Bei einem Wechsel der Formen 7 und/oder der Größe der herzustellenden Betonsteine wird das Innenvolumen der Dosierbuchsen 2 neu eingestellt, woraufhin die Befüllung der Formen in der oben beschriebenen Weise erfolgt.

## Patentansprüche

1. Vorrichtung zum Dosieren der Füllmenge zum Einfüllen in Formen (7) zur Herstellung von Bausteinen insbesondere Betonbausteinen, die zwischen einem Vorratsbehälter (1) und den zu befüllenden Formen (7) anzuordnen ist, umfassend Dosierbuchsen (2), die an einem Ende vom Vorratsbehälter (1) befüllbar sind und ihren Inhalt am anderen Ende zu den Formen (7) ausgeben können, und Einrichtungen, die das Innenvolumen der Dosierbuchsen (2) verändern, die so ausgebildet sind, dass sie die Dosierbuchsen (2) komprimieren und dadurch deren Querschnitt verändern, **dadurch gekennzeichnet, dass** die Dosierbuchsen in einem Dosierteller (3) angeordnet sind, der eine vorratsbehälterseitige Platte (3a) und eine formenseitige Platte (3b) aufweist, zwischen denen die Dosierbuchsen so angeordnet sind, dass sie mit ihren Enden in den Platten (3a, 3b) jeweils münden und der Dosierteller (3) relativ zum Vorratsbehälter (1) und relativ zu den zu befüllenden Formen (7) derart bewegbar ist, dass in einer Position die Dosierbuchsen (2) mit dem Vorratsbehälter (1) verbunden sind, und in einer anderen Position die Dosierbuchsen (2) mit ihren anderen Enden zu den zu befüllenden Formen (7) ausgerichtet sind.

2. Vorrichtung nach Anspruch 1, **dadurch gekennzeichnet, dass** der Dosierteller (3) um eine Drehachse (6) zwischen der Position, in der die Dosierbuchsen mit dem Vorratsbehälter (1) verbunden sind, und der Position, in der die Dosierbuchsen (6) mit ihren anderen Enden zu den befüllenden Formen (7) ausgerichtet sind, drehbar ist.

3. Vorrichtung nach Anspruch 1, **dadurch gekennzeichnet, dass** der Dosierteller (3) gegenüber dem Vorratsbehälter (1) und den zu befüllenden Formen (7) zwischen der Position, in der die Dosierbuchsen (2) mit dem Vorratsbehälter (1) verbunden sind, und der Position, in der die Dosierbuchsen (2) mit ihren anderen Enden zu den zu befüllenden Formen (7) ausgerichtet sind, verschiebbar ist.

4. Vorrichtung nach einem der vorhergehenden Ansprüche, **gekennzeichnet durch** mechanischen Einrichtungen zum Verändern des Innenvolumens der Dosierbuchsen (2).

5. Vorrichtung nach einem der Ansprüche 1 bis 3, **gekennzeichnet durch** hydraulische oder pneumatische Einrichtungen zum Verändern des Innenvolumens der Dosierbuchsen (2).

6. Vorrichtung nach einem der vorhergehenden Ansprüche, **dadurch gekennzeichnet, dass** die Dosierbuchsen (2) aus einem festen Gehäuse (12) bestehen, in dem eine elastische Innenbuchse (10) vorgesehen ist, und die Einrichtungen, die das Innenvolumen der Dosierbuchse ändern so ausgebildet sind, dass sie die elastische Innenbuchse (10) von außen beaufschlagen.

7. Vorrichtung nach einem der vorhergehenden Ansprüche **gekennzeichnet durch** eine pneumatische oder hydraulische Mengenzumesseinrichtung zum Verändern des Innenvolumens der Dosierbuchsen (2), die so ausgebildet ist, dass sie die Dosierbuchsen (2) mit einem Druckmedium in wählbarer Weise beaufschlagt.

8. Vorrichtung nach Anspruch 7, **dadurch gekennzeichnet, dass** das Druckmedium über Kolben (5) zugeführt wird, und die Wahl des Innenvolumens der Dosierbuchsen (2) über eine elektrische Wegmessung der Kolbenschubeinrichtung gewählt wird.

## Claims

1. An apparatus for measuring out the filling quantity to be filled into moulds (7) for the manufacture of building blocks, particularly concrete building blocks, wherein said apparatus is arranged between a reservoir (1) and the moulds (7) to be filled and comprises metering sleeves (2) that can be filled from the reservoir (1) on one end and deliver their content to the moulds (7) on the other end, as well as devices that change the internal volume of the metering sleeves (2) and are designed such that they compress the metering sleeves (2) and thereby change their cross section, **characterized in that** the metering sleeves are arranged in a metering disk (3) that features a plate (3a) on the reservoir side and a plate (3b) on the mould side, wherein the metering sleeves are arranged between said plates in such a way that their ends are respectively formed by the plates (3a, 3b), and wherein the metering disk (3) can be moved relative to the reservoir (1) and relative to the moulds (7) to be filled in such a way that the metering sleeves (2) are connected to the reservoir (1) in one position and the other ends of the metering sleeves (2) are aligned with the moulds (7) to be filled in another position.

2. The apparatus according to claim 1, **characterized in that** the metering disk (3) can be turned between the position, in which the metering sleeves are connected to the reservoir (1), and the position, in which the other ends of the metering sleeves (6) are aligned with the moulds (7) to be filled, about a rotational axis (6).

3. The apparatus according to claim 1, **characterized in that** the metering disk (3) can be displaced between the position, in which the metering sleeves (2) are connected to the reservoir (1), and the position, in which the other ends of the metering sleeves (2) are aligned with the moulds (7) to be filled, relative to the reservoir (1) and the moulds (7) to be filled.

4. The apparatus according to one of the preceding claims, **characterized by** mechanical devices for changing the internal volume of the metering sleeves (2).

5. The apparatus according to one of claims 1 to 3, **characterized by** hydraulic or pneumatic devices for changing the internal volume of the metering sleeves (2).

6. The apparatus according to one of the preceding claims, **characterized in that** the metering sleeves (2) consist of a rigid housing (12), in which an elastic inner sleeve (10) is provided, and **in that** the devices for changing the internal volume of the metering sleeve are realized such that they externally act upon the elastic inner sleeve (10).

7. The apparatus according to one of the preceding claims, **characterized by** a pneumatic or hydraulic quantity apportioning device for changing the internal volume of the metering sleeves (2), wherein said quantity apportioning device is realized in such a way that it selectively acts upon the metering sleeves (2) with a pressure medium.

8. The apparatus according to claim 7, **characterized in that** the pressure medium is supplied by means of pistons (5), and **in that** the chosen internal volume of the metering sleeves (2) is adjusted by means of an electric position measurement of the piston thrust unit.

## Revendications

1. Dispositif pour le dosage de la quantité de remplissage destinée à être versée dans des moules (7) pour la fabrication d'éléments de construction, en particulier d'éléments de construction en béton, lequel dispositif doit être disposé entre un récipient de stockage (1) et les moules à remplir (7), comprenant des douilles de dosage (2) qui peuvent être remplies sur une extrémité du récipient de stockage (1) et peuvent déverser leur contenu sur l'autre extrémité vers les moules (7), et des systèmes qui modifient le volume intérieur des douilles de dosage (2) et qui sont réalisés de sorte à comprimer les douilles de dosage (2) et modifier par là même leur section transversale, **caractérisé en ce que** les douilles de dosage sont disposées dans un disque de dosage (3) qui présente une plaque côté récipient de stockage (3a) et une plaque côté moule (3b), entre lesquelles les douilles de dosage sont disposées de sorte à déboucher respectivement avec leurs extrémités dans les plaques (3a, 3b) et le disque de dosage (3) peut être déplacé par rapport au récipient de stockage (1) et par rapport aux moules (7) à remplir de telle manière que dans une position, les douilles de dosage (2) sont reliées au récipient de stockage (1), et dans une autre position, les douilles de dosage (2) sont orientées avec leurs autres extrémités vers les moules (7) à remplir.

2. Dispositif selon la revendication 1, **caractérisé en ce que** le disque de dosage (3) peut être tourné autour d'un axe de rotation (6) entre la position, dans laquelle les douilles de dosage sont reliées au récipient de stockage (1) et la position, dans laquelle les douilles de dosage (6) sont orientées avec leurs autres extrémités vers les moules à remplir (7).

3. Dispositif selon la revendication 1, **caractérisé en ce que** le disque de dosage (3) peut être déplacé par rapport au récipient de stockage (1) et aux moules (7) à remplir entre la position, dans laquelle les douilles de dosage (2) sont reliées au récipient de stockage (1), et la position, dans laquelle les douilles de dosage (2) sont orientées avec leurs autres extrémités vers les moules à remplir (7).

4. Dispositif selon l'une quelconque des revendications précédentes, **caractérisé par** des systèmes mécaniques destinés à modifier le volume intérieur des douilles de dosage (2).

5. Dispositif selon l'une quelconque des revendications 1 à 3, **caractérisé par** des systèmes hydrauliques ou pneumatiques destinés à modifier le volume intérieur des douilles de dosage (2).

6. Dispositif selon l'une quelconque des revendications précédentes, **caractérisé en ce que** les douilles de dosage (2) se composent d'un boîtier fixe (12), dans lequel une douille intérieure élastique (10) est prévue, et les systèmes qui modifient le volume intérieur de la douille de dosage, sont réalisés de sorte à alimenter la douille intérieure élastique (10) de l'extérieur.

7. Dispositif selon l'une quelconque des revendications précédentes, **caractérisé par** un système de mesure de quantité pneumatique ou hydraulique destiné à modifier le volume intérieur des douilles de dosage (2) qui est réalisé de sorte à alimenter de manière sélectionnable les douilles de dosage (2) en un moyen sous pression.

8. Dispositif selon la revendication 7, **caractérisé en ce que** le moyen sous pression est amené par des pistons (5) et le choix du volume intérieur des douilles de dosage (2) est réalisé par une mesure de déplacement électrique du système de poussée de piston.
